# EUROPEAN PATENT APPLICATION

(11) **EP 3 680 192 A1**
(43) Date of publication of application: **15.07.2020**
(21) Application number: 18857711.8
(22) Date of filing: 19.09.2018
(51) Int. Cl.: B65D 81/24, A23L 3/00, A23L 3/10, B65B 55/14, B65D 81/20, B65D 85/50

(54) **METHOD FOR MANUFACTURING PACKAGED FOOD**

(30) Priority: 22.09.2017 JP 2017182802
(71) Applicant: Hisaka Works, Ltd., Osaka-shi, Osaka 530-0057 (JP)
(72) Inventor: TSUTSUMI, Ryuichi, Higashi-Osaka-shi Osaka 578-0973 (JP)
(74) Representative: Isarpatent
(86) International application number: PCT/JP2018/034560
(87) International publication number: WO 2019/059206

(57) **Abstract**

Provided is a method of producing a packaged food including: a placing step of placing a food in a container having at least one vent hole formed therethrough; a sterilizing step of sterilizing the food in the container; and a sealing step of closing the at least one vent hole to completely seal the food in the container.

## Description

### CROSS-REFERENCE TO RELATED APPLICATION

This application claims priority to Japanese Patent Application No. 2017-182802, the disclosure of which is incorporated herein by reference in its entirety.

### FIELD

The present invention relates to a method of producing a packaged food in which a food including a prepared food is packaged.

### BACKGROUND

Packaged foods include foods that are cooked or processed in, for example, a food factory, placed in molded containers, and distributed in the containers each having a top sheet or a covering lid placed thereon. Since such packaged foods are not completely sealed in the containers as described above, outside air may enter the containers. These packaged foods therefore stay in good condition for a period of about 1 to 2 days, which is extremely short; that is, the packaged foods do not stay in good condition for long, resulting in the problem of an extremely high disposal loss (i.e., low product yield).

Recently, however, those packaged foods that stay in good condition for longer with their molded containers being completely sealed by, for example, heat-sealing have been distributed. Some of them stay in good condition for more than two weeks when stored in refrigeration.

The molded containers that have been sealed by, for example, the heat-sealing are free from entry of bacteria from the outside, but still have their inside not in a completely aseptic condition. Thus, it is sufficiently conceivable that bacteria in the containers grow when the environment changes in the course of distribution. In order for the foods to stay in good condition for long, cleanliness is required to be strictly controlled to have the working environment in the food factory as aseptic as possible. Conventionally proposed has been a method in which a food placed in a container is sterilized, and then its container body is tightly closed with a lid in a clean room (aseptic room) (Patent Literature 1). For example, there are some cases where the cleanliness of the working environment in which cooked or processed foods are handled is controlled to a level as high as 10000 or 1000 according to NASA clean room standards. However, introducing such a clean room causes a problem of substantial costs incurred for installing and maintaining the air-conditioning equipment.

In view of this, the applicant has proposed a method of packaging a food in which a heat-sterilized food is placed in a container body, the container body is covered with a gas-permeable film, and an airtight film is laminated on the gas-permeable film while the inside of the container is in a positive pressure condition by being heated, to hermetically seal the container (Patent Literature 2).

Such a method produces an effect that sterilized foods can be hermetically packaged without adhesion of bacteria thereto even if no clean room is introduced, since bacteria and dusts are less likely to reach the inside of the container under a positive pressure condition with the airtight film laminated on the gas-permeable film.

### CITATION LIST

### Patent Literature

Patent Literature 1: JP H9-009937 A
Patent Literature 2: JP 2013-079093 A

### SUMMARY

### Technical Problem

It is an object of the present invention to provide a method of producing a packaged food capable of producing a packaged food that stays in good condition for as long as possible through suppression of bacterial contamination.

### Solution to Problem

According to the present invention, a method of producing a packaged food includes: a placing step of placing a food in a container having at least one vent hole formed therethrough; a sterilizing step of sterilizing the food in the container; and a sealing step of closing the at least one vent hole to completely seal the food in the container.

As an aspect of the present invention, the method of producing the packaged food may be such that the container includes a container body and a lid, and the placing step includes: a covering step of placing the food in the container body and covering the container body with the lid; and a piercing step of forming the at least one vent hole through the container.

As an aspect of the present invention, the method of producing the packaged food may be such that the sterilizing step includes: an evacuating step of discharging air in the container through the at least one vent hole; and a steam-sterilizing step of supplying heated steam into the container through the at least one vent hole to sterilize the food in the container with the heated steam.

As an aspect of the present invention, the method of producing the packaged food may further include, between the steam-sterilizing step and the sealing step, a vacuum-cooling step of discharging the steam out of the container and thereby making the container in a vacuum state to cool the food in the container.

As an aspect of the present invention, the method of producing the packaged food may include, between the vacuum-cooling step and the sealing step, a gas displacement step of filling the container with sterilized gas.

### Advantageous Effects of Invention

According to the present invention, the food placed and sterilized in the container communicates with the outside only through the at least one vent hole until the container is completely sealed; therefore, the opportunity for bacteria to enter the container is greatly reduced. Thus, it is possible to effectively prevent bacteria from entering the container without introducing a large-scale facility such as a clean room, and a method of producing a packaged food having a sufficient duration of time until best-before date or use-by date is provided.

### BRIEF DESCRIPTION OF DRAWINGS

Fig. 1A is an explanatory view showing a step in an embodiment of a method of producing a packaged food according to the present invention, the view showing a state where a cooked food is placed in a container body.
Fig. 1B is an explanatory view showing a step in the embodiment of the method of producing the packaged food according to the present invention, the view showing a state where a container body having the food placed therein is sealed with a first film member.
Fig. 1C is an explanatory view showing a step in the embodiment of the method of producing the packaged food according to the present invention, the view showing a step of forming vent holes through the first film member.
Fig. 1D is an explanatory view showing a step in the embodiment of the method of producing the packaged food according to the present invention, the view showing an evacuating step of discharging air in the container through the vent holes.
Fig. 1E is an explanatory view showing a step in the embodiment of the method of producing the packaged food according to the present invention, the view showing a steam-sterilizing step of supplying heated steam into the container through the vent holes to sterilize the food in the container.
Fig. 1F is an explanatory view showing a step in the embodiment of the method of producing the packaged food according to the present invention, the view showing a vacuum-cooling step of discharging the steam in the container through the vent holes and further making the container in a vacuum state to cool the food in the container.
Fig. 1G is an explanatory view showing a step in the embodiment of the method of producing the packaged food according to the present invention, the view showing a gas displacement step of filling the container with sterilized gas.
Fig. 1H is an explanatory view showing a step in the embodiment of the method of producing the packaged food according to the present invention, the view showing a sealing step of closing the vent holes with second film members.
Fig. 2 is a plan view showing the positions of the vent holes formed through the first film member with which the container body is sealed, in the embodiment of the method of producing the packaged food according to the present invention.

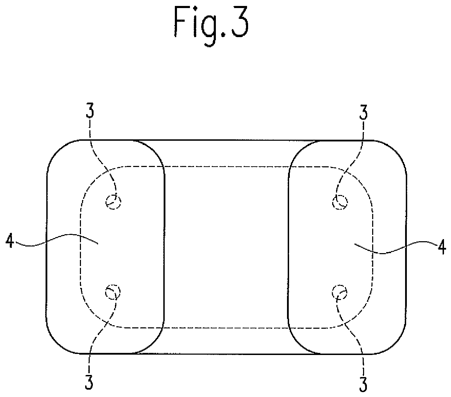

Fig. 3 is a plan view showing a state where the second film members are attached to the first film member having the vent holes formed therethrough to close these vent holes, in the embodiment of the method of producing the packaged food according to the present invention.
Fig. 4 is a plan view showing the positions of vent holes formed through a first film member with which a container body is sealed, in another embodiment of a method of producing a packaged food according to the present invention.

### DESCRIPTION OF EMBODIMENTS

Hereinafter, an embodiment of the present invention will be described with reference to the drawings.

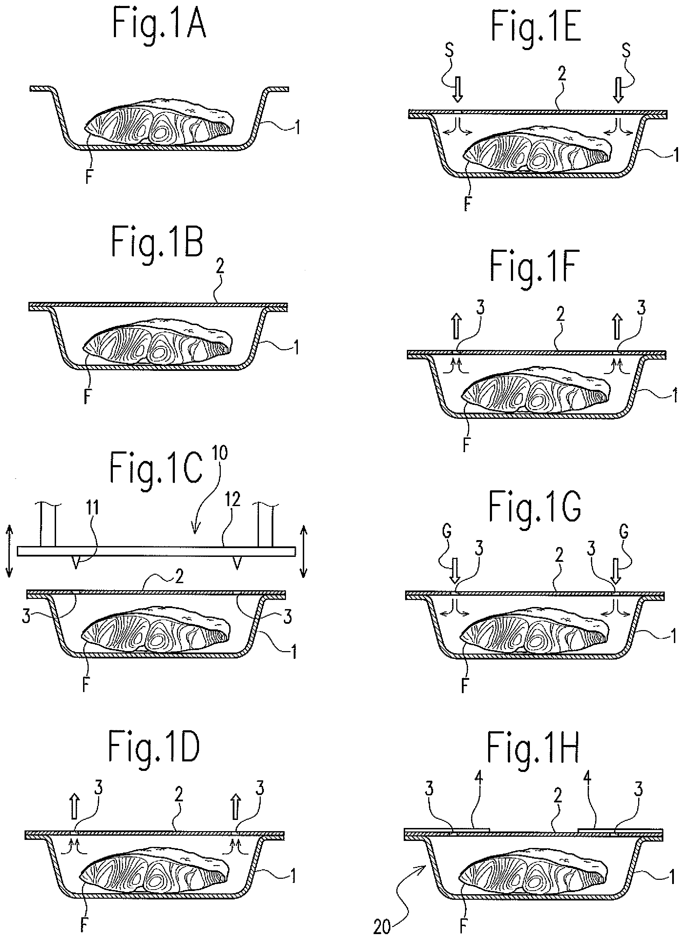

Fig. 1A to Fig. 1H are explanatory views each showing each step in order in an embodiment of a method of producing a packaged food according to the present invention. Hereinafter, the each step will be specifically described.

As shown in Fig. 1A, in the method of producing the packaged food according to the embodiment of the present invention, a food F is firstly placed in a container body 1. As the food F, a food cooked and processed in, for example, a food factory and a chilled processed food can be employed. Preferably, as the food F, a "prepared food to be packaged after being heated" stipulated in "Sophistication Standard of Prepared Food" by Japan Ready-made Meal Association can be suitably employed.

Next, as shown in Fig. 1B, the container body 1 is sealed with a first film member 2. The first film member 2 is thermally welded to the peripheral edge of the container body 1 using, for example, a heat sealing machine (not shown). The first film member 2, through which a vent hole is to be formed in a subsequent piercing step, is not particularly limited as long as it is a film member capable of having the vent hole formed therethrough. However, a biaxially oriented plastic film member is particularly preferable since the vent hole is easily formed through such a film member and cracks hardly occur.

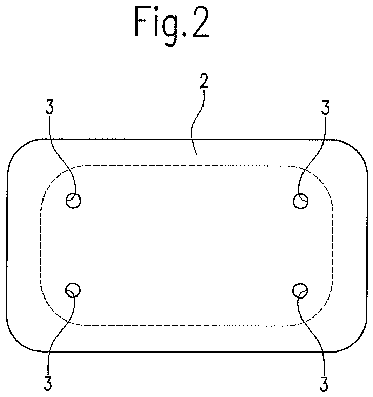

Next, in the piercing step, a vent hole 3 is formed through the first film member 2, as shown in Fig. 1C. It is preferable that a plurality of vent holes 3 be formed for one container. Specifically, in the case where the container has a substantially rectangular shape in plan view, it is preferable that, as shown in Fig. 2, each of the plurality of vent holes 3 be formed in each of the four corner portions of the container in plan view, that is, the total four vent holes 3 be formed. The container provided with the plurality of vent holes 3 enables quick air discharge therefrom and quick steam supply thereinto. The vent holes 3 can each have a diameter of 0.5 to 10 mm, preferably 1 to 5 mm, more preferably 2 to 3 mm.

The total area of the vent holes 3 relative to the area of an upper opening 1a of the container body 1, that is, the opening ratio of the vent holes 3, is preferably set to 0.01 to 2%, more preferably set to 0.05 to 1%.

As shown in, for example, Fig. 1C, employed in the piercing step can be a method of simultaneously forming the plurality of vent holes 3 in which a piercing jig 10 provided with a plurality of piercing needles 11 at certain positions of a flat plate 12 is pressed onto the first film member 2. The piercing needles 11 can each have a tip having, for example, a round, triangular, or polygonal shape in cross section. It is also possible to punch a part of the film member to form a vent hole.

The food F is placed in the container body 1, the container body 1 is sealed with the first film member 1, and further the vent holes 3 are formed through the first film member 2. That is, the food-containing container has the plurality of vent holes 3 held open. Next, the food-containing container (the temporarily sealed food-containing container) is fed to an evacuating step. In this embodiment, a description will be given on the case where the evacuating step as well as the subsequent steps, namely a steam-sterilizing step, a pressure-reducing step, a cooling step, and a gas displacement step are carried out using a rapid preparation sterilizer RIC (hereinafter simply referred to also as RIC) manufactured by HISAKA WORKS, LTD. The rapid preparation sterilizer RIC (not shown) includes: a processing tank capable of placing a food to be processed therein; a steam feeder configured to supply steam into the processing tank; a decompressor configured to discharge air from the processing tank to make the tank in a vacuum state; and a heater configured to heat the inside of the processing tank.

In the evacuating step in this embodiment, a plurality of containers each containing the food are arranged on a tray, and a plurality of such trays stacked in multiple stages in the vertical direction are put into the processing tank constituting the RIC. After a lid of the processing tank is closed to seal the processing tank, the processing tank is evacuated to a vacuum state. The pressure in the processing tank in a vacuum state is preferably 5 to 70 Torr, more preferably 20 to 40 Torr. When the processing tank is evacuated to a vacuum state, each of the containers is also evacuated through the vent holes 3 as shown in Fig. 1D to the same vacuum state as in the processing tank.

In the evacuating step, pressure may be reduced by evacuation and partially recovered by steam supply in a repeated manner. Specifically, the evacuating step can be carried out in order of evacuation to a vacuum state (30 Torr), recovering pressure by steam (180 Torr), evacuation to a vacuum state (30 Torr), recovering pressure by steam (180 Torr), and evacuation to the final vacuum state.

In the subsequent steam-sterilizing step, steam is supplied into the processing tank and the temperature in the processing tank is raised to 100 to 145 °C, preferably 115 to 135 °C. Steam S that has been supplied into the processing tank and heated is also distributed into the container through the vent holes 3, as shown in Fig. 1E. Thus, the food F in the container is sterilized by the heated steam S. In the steam-sterilizing step, the state where the temperature has reached the specific temperature is maintained preferably for 1 second to 5 minutes, more preferably for 1 second to 1 minute.

In the subsequent cooling step, the food is cooled by reducing the pressure in the processing tank to discharge the steam therefrom and further making the processing tank in a vacuum state. Specifically, the pressure in the processing tank is preferably 5 to 30 Torr, more preferably 5 to 9 Torr. Such a vacuum state allows steam or the like to be discharged also from the container to make the container in a vacuum state, as shown in Fig. 1F. Water is attached to the surface of the food due to the steam S supplied in the previous steam-sterilizing step, and making the container in a vacuum state causes the water to evaporate and thereby draws latent heat from the food, consequently cooling the food F efficiently. As a result of the cooling step, the temperature of the food is cooled to 1 to 40 °C, preferably 1 to 10 °C.

Following the cooling step, a gas displacement step is preferably carried out. In the gas displacement step, sterilized gas is supplied into the processing tank. Gas can be sterilized by being made to pass through a sterilization filter such as a HEPA (High Efficiency Particulate Air) filter. The gas is preferably an inert gas such as nitrogen gas or carbon dioxide gas, but may also be air. In this embodiment, nitrogen gas is supplied as the sterilized gas. This allows also the container to be filled with nitrogen gas G through the vent holes 3, as shown in Fig. 1G.

Upon completion of the gas displacement step, the lid of the processing tank is opened to take out the foods-containing containers along with the trays. The foods-containing containers that have been taken out of the processing tank are subsequently fed to a sealing step. The sealing step can be performed by, for example, a labeler, a sealing machine or the like. The sealing step allows, as shown in Fig. 1H, the vent holes 3 formed through the first film member 2 to be sealed with a second film member 4 so that the food F is in a completely sealed state.

The second film member 4 for use is not particularly limited as long as it can close at least one vent hole 3, but preferably has a smaller area than that of the first film member 2. As the second film member 4, a film having an adhesive layer (not shown) on one side is preferably used, and the second film member 4 is attached to the first film member 2 via the adhesive layer. The adhesive layer is preferably sterilized by ultraviolet irradiation or the like. That is, it is preferable that the adhesive layer be formed on the one side of the second film member; sterilized by ultraviolet irradiation or the like; then covered with a release film; exposed through removal of the release film when used; and attached to the first film member. In this embodiment, the second film member 4 is formed in a substantially rectangular shape in plan view, and is large enough to cover two of the vent holes 3 formed on the top side of the container. Further, two second film members 4 are attached respectively to both ends in a longitudinal direction of the container via the adhesive layer.

The adhesive layer is not particularly limited as long as it has enough adhesion to keep the second film member 4 not separated from the first film member 2 from the time when the packaged food 20 is produced in, for example, a food factory to the time when a consumer opens the packaged food 20. The adhesive layer may also have such an adhesive strength that, for example, when the produced packaged food is heated in a microwave oven or the like, the increased pressure in the container of the food allows the second film member 4 to be separated from the first film member 2 and thereby exposes the vent holes 3, through which the pressure in the container can be released. This configuration allows the packaged food to be suitable for microwave heating.

According to the method of producing the packaged food in this embodiment, the food F that has been sterilized in the container body 1 in the steam-sterilizing step is kept covered by the first film member 2, and bacteria or dust can enter the container only through the vent holes 3 until the container is completely sealed. Therefore, the likelihood of contamination of the food is greatly reduced between the sterilizing step and the sealing step.

Specifically, in the case where vent holes are formed to have the opening ratio of 0.2% and the cleanliness of a general food factory is assumed to be approximately 1,000,000, the cleanliness inside the container is 2000, which is obtained by multiplying this 1,000,000 by 0.2%. This indicates that the frequency at which the food in the container is contaminated with falling bacteria is equivalent to that in a conventional clean room. Thus, the packaged food can be produced at the same cleanliness level as that in a clean room without installing such a clean room.

Even when the steam-sterilizing step, the vacuum-cooling step, or the gas displacement step as aforementioned is carried out, the vent holes 3 formed through the first film member 2 can constantly maintain certain opening areas without being deformed, and thereby allow these steps to be quickly carried out. It may also be conceivable that, for example, the lid to be sealed along the entire periphery of the upper opening of the container body be partially left unsealed to form a clearance instead of forming the vent holes. In such a case, however, the lid is subjected to deformation by pressure difference between the inside and the outside of the container as well as the resultant gas flow or with temperature during the processes in the steam-sterilizing step, the vacuum-cooling step, or the gas displacement step. Thus, the opening area of the clearance formed with the lid partially left unsealed does not stay constant, which might hinder the processes in these steps.

In this embodiment, the aforementioned vacuum-cooling step is carried out after the steam-sterilizing step to allow the food to be rapidly cooled and thereby enable the cooling time from the steam-sterilizing step to the sealing step to be significantly shortened.

Further, in this embodiment, the aforementioned gas displacement step is carried out after the vacuum-cooling step so that the food-containing container is filled with nitrogen gas and hence the inside of the container is in a hypoxic state. Sealing the container to obtain such a hypoxic state can prevent bacterial growth inside the container. The hypoxic state can suppress oxidization of the food in the container, enabling the quality of the food to stay in good condition over a longer period of time.

In this embodiment, when the container body 1 or the first film member 2 attempts to expand or shrink in the steam-sterilizing step in which the container is heated or in the vacuum-cooling step in which the container is cooled, the adhesion state between the container body 1 and the first film member 2 is not impaired since the entire periphery of the first film member 2 is heat-sealed along the entire periphery of the opening of the container body 1.

The method of producing the packaged food described in the aforementioned embodiment is only an example of the present invention, and the present invention is not limited to the aforementioned embodiment.

For example, the aforementioned embodiment has been described by taking the case where the first film member 2 is heat-sealed to the container body 1 to seal the container, without limitation thereto. A lid having a similar hardness to that of the container body 1 may be employed, and the lid may have vent holes formed therethrough.

The container body 2 may have not only a tray shape as in the aforementioned embodiment but any shape such as a cup shape, a bottle shape, or a bag shape. The same applies to the material of the container body 1, which may be of any material such as plastic, metal, or glass.

Further, the aforementioned embodiment has been described with regard to the positions of the vent holes by taking, for example, the case where the vent holes are formed through the first film member, which serves as the lid of the container body 1, without limitation thereto. The vent holes may be formed through the container body. In the case where the vent holes are formed through the container body, they may be formed, for example, through a side of the container body.

In the aforementioned embodiment, the piercing step is carried out after the sealing step, without limitation thereto. The first film member with the vent holes formed therethrough in advance may be thermally welded to the food-containing container body to hold the container in a covered (temporarily sealed) state.

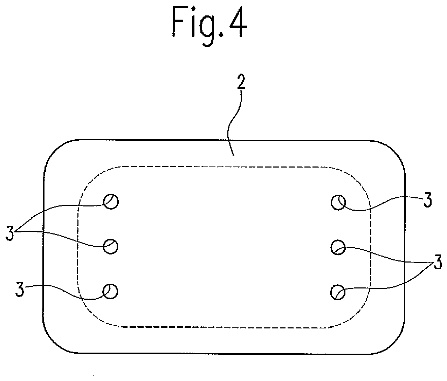

The aforementioned embodiment has been described by taking, for example, the case where each of the vent holes 3 is formed at each of the four corners of the container having a substantially rectangular shape in plan view. The number and positions of the vent holes are not limited thereto, and for example, as shown in Fig. 4, three or more vent holes may be formed along each of the opposed sides of the container. Alternatively, a plurality of vent holes may be formed that align to cross the container in the width direction or the longitudinal direction of the container.

In association with this configuration, one second film member 4 can have such a size and shape as to cover two or more vent holes 3. The aforementioned embodiment has been described by taking, for example, the case where two second film members 4 each having a smaller area than that of the first film member 2 are attached to one container, without limitation thereto. The second film member 4 having the same dimension and the same shape as those of the first film member 2 may be attached to the first film member 2 so as to cover the entire surface thereof. Alternatively, three or more second film members 4 may be attached to one container.

The configuration may also be such that the second film member 4 is partially attached to the first film member 2 before the piercing step and the remaining portion of the second film member 4 is attached to the first film member 2 to close the vent holes 3 when the piercing step is completed.

In the aforementioned embodiment, in the placing step, the piercing step is carried out after the covering step, but the covering step may be carried out after the piercing step. For example, in the placing step, the food-containing container body 1 may be covered with the first film member 2 with the vent holes 3 formed therethrough in advance.

In this embodiment, nitrogen gas is employed in the gas displacement step, but in addition thereto, a low-reactive gas such as carbon dioxide may also be employed as an inert gas.

The aforementioned embodiment has been described by taking, for example, the case where, after the processing tank is made in a vacuum state to cool the food, sterilized gas (e.g., an inert gas such as nitrogen gas or carbon dioxide gas) is supplied into the processing tank, and then the food-containing container is taken out of the processing tank, without limitation thereto. For example, the configuration may be such that, after the processing tank is made in a vacuum state to cool the food, sterilized gas is once supplied into the processing tank to recover the pressure in the processing tank to atmospheric pressure; the food-containing container is taken out of the processing tank; and then sterilized gas (e.g., an inert gas such as nitrogen gas or carbon dioxide gas) is further supplied into the container through the vent holes 3.

### REFERENCE SIGNS LIST

1: Container body
2: First film member
3: Vent hole
4: Second film member
10: Piercing jig
20: Packaged food
F: Food
S: Heated steam
G: Nitrogen gas

## Claims

1. A method of producing a packaged food, comprising:
a placing step of placing a food in a container having at least one vent hole formed therethrough;
a sterilizing step of sterilizing the food placed in the container; and
a sealing step of closing the at least one vent hole to completely seal the food in the container.

2. The method of producing the packaged food according to claim 1, wherein
the container comprises a container body and a lid, and
the placing step comprises: a covering step of placing the food in the container body and covering the container body with the lid; and a piercing step of forming the at least one vent hole through the container.

3. The method of producing the packaged food according to claim 1 or 2, wherein
the sterilizing step comprises: an evacuating step of discharging air in the container through the at least one vent hole; and a steam-sterilizing step of supplying heated steam into the container through the at least one vent hole to sterilize the food in the container with the heated steam.

4. The method of producing the packaged food according to claim 3, the method further comprising, between the steam-sterilizing step and the sealing step, a vacuum-cooling step of discharging the steam out of the container and thereby making the container in a vacuum state to cool the food in the container.

5. The method of producing the packaged food according to claim 4, comprising, between the vacuum-cooling step and the sealing step, a gas displacement step of filling the container with sterilized gas.
